(19) Europäisches Patentamt
European Patent Office
Office européen des brevets

(11) EP 1 947 941 B1

(12) EUROPÄISCHE PATENTSCHRIFT

(45) Veröffentlichungstag und Bekanntmachung des Hinweises auf die Patenterteilung:
**22.04.2009 Patentblatt 2009/17**

(21) Anmeldenummer: **06819262.4**

(22) Anmeldetag: **06.11.2006**

(51) Int Cl.:
***A01N 43/54*** *(2006.01)*

(86) Internationale Anmeldenummer:
**PCT/EP2006/068105**

(87) Internationale Veröffentlichungsnummer:
**WO 2007/054473 (18.05.2007 Gazette 2007/20)**

# (54) FUNGIZIDE MISCHUNGEN ENTHALTEND BOSCALID UND PYRIMETHANIL

FUNGICIDAL MIXTURES COMPRISING BOSCALID AND PYRIMETHANIL

MELANGES FONGICIDES CONTENANT DU BOSCALIDE ET DU PYRIMETHANILE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.11.2005 EP 05024522**

(43) Veröffentlichungstag der Anmeldung:
**30.07.2008 Patentblatt 2008/31**

(73) Patentinhaber: **BASF SE**
**67056 Ludwigshafen (DE)**

(72) Erfinder:
- **BIRNER, Erich**
  **67317 Altleiningen (DE)**
- **MILLING, Richard**
  **Manchester, M1 2ED (GB)**
- **GOLD, Randall Evan**
  **67283 Obrigheim (DE)**
- **STIERL, Reinhard**
  **67251 Freinsheim (DE)**

(56) Entgegenhaltungen:
**EP-A- 0 545 099** **DD-A1- 151 404**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 947 941 B1

## Beschreibung

Die vorliegende Erfindung betrifft fungizide Mischungen, enthaltend

(1) Boscalid der Formel (I)

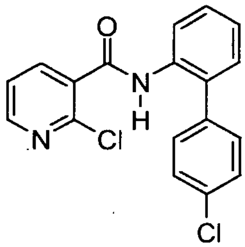

(I)

und

(2) Pyrimethanil der Formel (II)

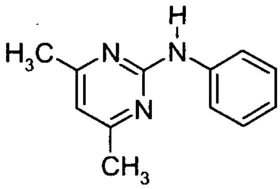

(II)

in einer synergistisch wirksamen Menge.

Außerdem betrifft die Erfindung ein Verfahren zur Bekämpfung von Schadpilzen mit Mischungen von Boscalid (I) mit Pyrimethanil (II), die Verwendung von Boscalid (I) mit Pyrimethanil (II) zur Herstellung derartiger Mischungen, fungizide Mittel, die diese Mischungen enthalten, sowie Saatgut, das diese Mischungen enthält.

Boscalid ist aus der EP-A 545099 bekannt.

Pyrimethanil ist aus der DD-A 151404 bekannt.

Im Hinblick auf eine Senkung der Aufwandmengen und eine Verbesserung des Wirkungsspektrums der bekannten Verbindungen (I) und (II) lagen der vorliegenden Erfindung Mischungen als Aufgabe zugrunde, die bei verringerter Gesamtmenge an ausgebrachten Wirkstoffen eine verbesserte Wirkung gegen Schadpilze aufweisen (synergistische Mischungen).

Demgemäß wurde die eingangs definierte Mischung von Boscalid mit Pyrimethanil gefunden. Es wurde außerdem gefunden, daß sich bei gleichzeitiger, und zwar gemeinsamer oder getrennter Anwendung von Boscalid (I) mit Pyrimethanil (II) oder bei Anwendung von Boscalid (I) mit Pyrimethanil (II) nacheinander Schadpilze besser bekämpfen lassen, als mit den Einzelverbindungen allein.

Boscalid kann in verschiedenen Kristallmodifikationen und in hydratisierter Form vorliegen (vgl. WO 03/29219 und WO 2004/72039); alle Modifikationen und Hydrate werden von Formel I umfaßt.

Die Mischungen aus der Verbindung (I) mit dem Wirkstoff (11), bzw. die gleichzeitige gemeinsame oder getrennte Verwendung einer Verbindung (I) mit Wirkstoff (II), zeichnen sich aus durch eine hervorragende Wirksamkeit gegen ein breites Spektrum von pflanzenpathogenen Pilzen, insbesondere aus der Klasse der Ascomyceten, Basidiomyceten, Deuteromyceten und Peronosporomyceten (syn. Oomyceten). Sie sind zum Teil systemisch wirksam und können im Pflanzenschutz als Blatt-, Beiz- und Bodenfungizide eingesetzt werden.

Besondere Bedeutung haben sie für die Bekämpfung einer Vielzahl von Pilzen an verschiedenen Kulturpflanzen wie Bananen, Baumwolle, Gemüsepflanzen (z. B. Gurken, Bohnen, Tomaten und Kürbisgewächse), Gerste, Gras, Hafer, Kaffee, Kartoffeln, Mais, Obstpflanzen, Reis, Roggen, Soja, Wein, Weizen, Zierpflanzen, Zuckerrohr sowie an einer Vielzahl von Samen.

Speziell eignen sie sich zur Bekämpfung folgender Pflanzenkrankheiten:

- Alternaria Arten an Gemüse, Raps, Zuckerrüben und Obst und Reis;
- Aphanomyces Arten an Zuckerrüben und Gemüse;
- Bipolaris- und Drechslera Arten an Mais, Getreide, Reis und Rasen;

- Blumeria graminis (Echter Mehltau) an Getreide;
- Botrytis cinerea (Grauschimmel) an Erdbeeren, Gemüse, Blumen und Weinreben;
- Bremia lactucae an Salat;
- Cercospora Arten an Mais, Sojabohnen, Reis und Zuckerrüben;
- Cochliobolus Arten an Mais, Getreide, Reis, (z.B. Cochliobolus sativus an Getreide, Cochliobolus miyabeanus an Reis);
- Colletotricum Arten an Sojabohnen und Baumwolle;
- Drechslera Arten an Getreide und Mais;
- Exserohilum Arten an Mais;
- Erysiphe cichoracearum und Sphaerotheca fuliginea an Gurkengewächsen;
- Fusarium und Verticillium Arten an verschiedenen Pflanzen;
- Gaeumanomyces graminis an Getreide;
- Gibberella Arten an Getreide und Reis (z.B.. Gibberella fujikuroi an Reis);
- Grainstaining complex an Reis;
- Helminthosporium Arten an Mais und Reis;
- Michrodochium nivale an Getreide;
- Mycosphaerella Arten an Getreide, Bananen und Erdnüssen;
- Phakopsara pachyrhizi und Phakopsara meibomiae an Sojabohnen;
- Phomopsis Arten an Sojabohnen und Sonnenblumen;
- Phytophthora infestans an Kartoffeln und Tomaten;
- Plasmopara viticola an Weinreben;
- Podosphaera leucotricha an Apfel;
- Pseudocercosporella herpotrichoides an Getreide;
- Pseudoperonospora Arten an Hopfen und Gurkengewächsen;
- Puccinia Arten an Getreide und Mais;
- Pyrenophora Arten an Getreide;
- Pyricularia oryzae, Corticium sasakii, Sarocladium oryzae, S.attenuatum, Entyloma oryzae an Reis;
- Pyricularia grisea an Rasen und Getreide;
- Pythium spp. an Rasen, Reis, Mais, Baumwolle, Raps, Sonnenblumen, Zuckerrüben, Gemüse und anderen Pflanzen;
- Rhizoctonia Arten an Baumwolle, Reis, Kartoffeln, Rasen, Mais, Raps, Kartoffeln, Zuckerrüben, Gemüse und anderen Pflanzen;
- Sclerotinia Arten an Raps und Sonnenblumen;
- Septoria tritici und Stagonospora nodorum an Weizen;
- Erysiphe (syn. Uncinula) necator an Weinrebe;
- Setospaeria Arten an Mais und Rasen;
- Sphacelotheca reilinia an Mais;
- Thievaliopsis Arten an Sojabohnen und Baumwolle;
- Tilletia Arten an Getreide;
- Ustilago Arten an Getreide, Mais und Zuckerrübe; und
- Venturia Arten (Schorf) an Apfel und Birne.

Außerdem eignen sich die erfindungsgemäßen Mischungen zur Bekämpfung von Schadpilzen wie Paecilomyces variotii im Materialschutz (z. B. Holz, Papier, Dispersionen für den Anstrich, Fasern bzw. Gewebe) und im Vorratsschutz.

Boscalid (I) und Pyrimethanil (II) können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Bevorzugt setzt man bei der Bereitstellung der Mischungen die reinen Wirkstoffe (I) und (II) ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Üblicherweise kommen Mischungen aus Boscalid (I) und Pyrimethanil (II) zur Anwendung. Unter Umständen können jedoch auch Mischungen von Boscalid (I) mit zwei oder ggf. mehreren Aktivkomponenten vorteilhaft sein.

Die Verbindung (I) und der Wirkstoff (II) werden üblicherweise in einem Gewichtsverhältnis von 100:1 bis 1:100, vorzugsweise 20:1 bis 1:20, insbesondere 10:1 bis 1:10 angewandt.

Die weiteren Aktivkomponenten werden gewünschtenfalls im Verhältnis von 20:1 bis 1:20 zu der Verbindung (I) gemischt.

Die Aufwandmengen der erfindungsgemäßen Mischungen liegen, vor allem bei landwirtschaftlichen Kulturflächen, je nach Art der Verbindung und des gewünschten Effekts bei 5 g/ha bis 2000 g/ha, vorzugsweise 20 bis 900 g/ha, insbesondere 50 bis 750 g/ha.

Die Aufwandmengen für Boscalid (I) liegen entsprechend in der Regel bei 1 bis 1000 g/ha, vorzugsweise 10 bis 900 g/ha, insbesondere 20 bis 750 g/ha.

Die Aufwandmengen für Pyrimethanil (II) liegen entsprechend in der Regel bei 1 bis 2000 g/ha, vorzugsweise 10 bis 900 g/ha, insbesondere 40 bis 750 g/ha.

Bei der Saatgutbehandlung werden im allgemeinen Aufwandmengen an Mischung von 1 g bis 1000 g pro 100 kg Saatgut, vorzugsweise 1 g bis 750 g pro 100 kg, insbesondere 5 g bis 500 g pro 100 kg, verwendet.

Das Verfahren zur Bekämpfung von Schadpilzen erfolgt durch die getrennte oder gemeinsame Applikation von Boscalid (I) und Pyrimethanil (II) oder einer Mischung aus Boscalid I und Pyrimethanil II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen Mischungen bzw. Boscalid (I) und Pyrimethanil (II) können in die üblichen Formulierungen überführt werden, z. B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z. B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z. B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z. B. Kaoline, Tonerden, Talkum, Kreide) und synthetische Gesteinsmehle (z. B. hochdisperse Kieselsäure, Silikate); Emulgiermittel wie nichtionogene und anionische Emulgatoren (z. B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.-%, vorzugsweise zwischen 0,1 und 90 Gew.-% der Wirkstoffe. Die Wirkstoffe werden dabei in einer Reinheit von 90% bis 100%, vorzugsweise 95% bis 100% (nach NMR-Spektrum) eingesetzt.

Beispiele für Formulierungen sind: 1. Produkte zur Verdünnung in Wasser

A) Wasserlösliche Konzentrate (SL)

10 Gew.-Teile von (I), (II) oder einer Mischung aus (I) und (II) werden mit 90 Gew.-Teilen Wasser oder einem wasserlöslichen Lösungsmittel gelöst. Alternativ werden Netzmittel oder andere Hilfsmittel zugefügt. Bei der Verdünnung in Wasser löst sich der Wirkstoff. Man erhält auf diese Weise eine Formulierung mit einem Wirkstoffgehalt von 10 Gew.-%.

B) Dispergierbare Konzentrate (DC)

20 Gew.-Teile von (I), (II) oder einer Mischung aus (I) und (II) werden in 70 Gew.-Teilen Cyclohexanon unter Zusatz von 10 Gew.-Teilen eines Dispergiermittels, z. B. Polyvinylpyrrolidon, gelöst. Bei Verdünnung in Wasser ergibt sich eine Dispersion. Der Wirkstoffgehalt beträgt 20 Gew.-%

C) Emulgierbare Konzentrate (EC)

15 Gew.-Teile von (I), (II) oder einer Mischung aus (I) und (II) werden in 75 Gew.-Teilen Xylol unter Zusatz von Ca-Dodecylbenzolsulfonat und Ricinusölethoxylat (jeweils 5 Gew.-Teile) gelöst. Bei der Verdünnung in Wasser ergibt sich eine Emulsion. Die Formulierung hat einen Wirkstoffgehalt von 15 Gew.-%.

D) Emulsionen (EW, EO)

25 Gew.-Teile von (I), (II) oder einer Mischung aus (I) und (11) werden in 35 Gew.-Teilen Xylol unter Zusatz von Ca-Dodecylbenzolsulfonat und Ricinusölethoxylat (jeweils 5 Gew.-Teile) gelöst. Diese Mischung wird mittels einer Emulgiermaschine (z. B. Ultraturax) in 30 Gew.Teile Wasser gegeben und zu einer homogenen Emulsion gebracht. Bei der Verdünnung in Wasser ergibt sich eine Emulsion. Die Formulierung hat einen Wirkstoffgehalt von 25 Gew.-%.

E) Suspensionen (SC, OD)

20 Gew.-Teile von (I), (II) oder einer Mischung aus (I) und (II) werden unter Zusatz von 10 Gew.-Teilen Dispergier- und Netzmitteln und 70 Gew.-Teilen Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs. Der Wirkstoffgehalt in der Formulierung beträgt 20 Gew.-% .

F) Wasserdispergierbare und wasserlösliche Granulate (WG, SG)

50 Gew.-Teile von (I), (II) oder einer Mischung aus (I) und (II) werden unter Zusatz von 50 Gew-Teilen Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs. Die Formulierung hat einen Wirkstoffgehalt von 50 Gew.-%.

G) Wasserdispergierbare und wasserlösliche Pulver (WP, SP)

75 Gew.-Teile von (I), (II) oder einer Mischung aus (I) und (II) werden unter Zusatz von 25 Gew.-Teilen Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs. Der Wirkstoffgehalt der Formulierung beträgt 75 Gew.-%.

2. Produkte für die Direktapplikation

H) Stäube (DP)

5 Gew.-Teile von (I), (II) oder einer Mischung aus (I) und (II) werden fein gemahlen und mit 95 Gew.-Teilen feinteiligem Kaolin innig vermischt. Man erhält dadurch ein Stäubemittel mit einem Wirkstoffgehalt von 5 Gew.-%.

J) Granulate (GR, FG, GG, MG)

0,5 Gew-Teile von (I), (II) oder einer Mischung aus (I) und (II) werden fein gemahlen und mit 99,5 Gew.-Teilen Trägerstoffe verbunden. Gängige Verfahren sind dabei die Extrusion, die Sprühtrocknung oder die Wirbelschicht. Man erhält dadurch ein Granulat für die Direktapplikation mit einem Wirkstoffgehalt von 0,5 Gew.-%.

K) ULV- Lösungen (UL)

10 Gew.-Teile von (I), (II) oder einer Mischung aus (I) und (II) werden in 90 Gew.-Teilen eines organischen Lösungsmittel z.B. Xylol gelöst. Dadurch erhält man ein Produkt für die Direktapplikation mit einem Wirkstoffgehalt von 10 Gew.-%.

Die Wirkstoffe können als solche, in Form ihrer Formulierungen oder den daraus bereiteten Anwendungsformen, z. B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die

zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, gegebenenfalls auch erst unmittelbar vor der Anwendung (Tankmix), zugesetzt werden. Diese Mittel werden üblicherweise zu den erfindungsgemäßen Mitteln im Gewichtsverhältnis 1:100 bis 100:1, bevorzugt 1:10 bis 10:1, zugemischt.

Die Verbindungen I und II, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Die fungizide Wirkung der Einzelverbindungen und der erfindungsgemäßen Mischungen ließ sich durch die folgenden Versuche zeigen.

Die Wirkstoffe wurden getrennt oder gemeinsam als eine Stammlösung aufbereitet mit 25 mg Wirkstoff, welcher mit einem Gemisch aus Aceton und/oder Dimethylsulfoxid und dem Emulgator Uniperol® EL (Netzmittel mit Emulgier- und Dispergierwirkung auf der Basis ethoxylierter Alkylphenole) im Volumen-Verhältnis Lösungsmittel-Emulgator von 99 zu 1 ad 10 ml aufgefüllt wurde. Anschließend wurde ad 100 ml mit Wasser aufgefüllt. Diese Stammlösung wurde mit dem beschriebenen Lösungsmittel-Emulgator-Wasser Gemisch zu der unten angegeben Wirkstoffkonzentration verdünnt.

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

α entspricht dem Pilzbefall der behandelten Pflanzen in % und
β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b
x der Wirkungsgrad, ausgedrückt in % der unbehandelten Kontrolle, beim Einsatz des Wirkstoffs A in der Konzentration a
y der Wirkungsgrad, ausgedrückt in % der unbehandelten Kontrolle, beim Einsatz des Wirkstoffs B in der Konzentration b

Anwendungsbeispiel 1 - Protektive Wirksamkeit gegen Puccinia recondita an Weizen (Weizenbraunrost) (Puccrt P1)

Blätter von in Töpfen gewachsenen Weizensämlingen der Sorte "Kanzler" wurden mit einer wässriger Suspension in der unten angegebenen Wirkstoffkonzentration bis zur Tropfnässe besprüht. Am nächsten Tag wurden die behandelten Pflanzen mit einer Sporensuspension des Weizenbraunrostes (Puccinia recondita) inokuliert. Anschließend wurden die Pflanzen für 24 Stunden in eine Kammer mit hoher Luftfeuchtigkeit (90 bis 95 %) bei 20 bis 22 C gestellt. Während dieser Zeit keimten die Sporen aus und die Keimschläuche drangen in das Blattgewebe ein. Am folgenden Tag wurden die Versuchspflanzen ins Gewächshaus zurückgestellt und bei Temperaturen zwischen 20 und 22 C und 65 bis 70 % relativer Luftfeuchte für weitere 7 Tage kultiviert. Dann wurde das Ausmaß der Rostpilzentwicklung auf den

Blättern visuell ermittelt.

| Wirkstoff/-Wirkstoffkombination | Konz (ppm) | Verhältnis | Beobachtete Wirkung (%) | Berech-nete Wirkung nach Colby (%) | Synergismus | Höhe des Synergismus (%) |
|---|---|---|---|---|---|---|
| Pyrimethanil | 2<br>4 | | 0<br>0 | | | |
| Boscalid | 8 | | 22 | | | |
| | | | | | | |
| Boscalid<br>Pyrimethanil | 8<br>2 | 4:1 | 56 | 22 | Ja | 34 |
| | | | | | | |
| Boscalid<br>Pyrimethanil | 8<br>4 | 2 :1 | 67 | 22 | Ja | 45 |
| Untreated | | | 90 % Befall | | | |

**Patentansprüche**

1. Fungizide Mischungen enthaltend

(1) Boscalid der Formel (I)

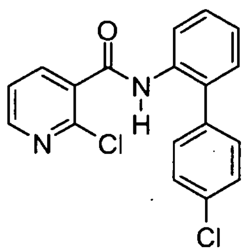

(I)

und
(2) Pyrimethanil der Formel (II)

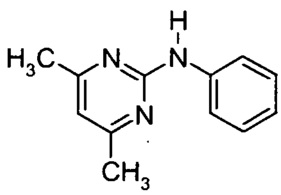

(II)

in einer synergistisch wirksamen Menge.

2. Fungizide Mischung nach Anspruch 1, **dadurch gekennzeichnet, dass** das Gewichtsverhältnis von Boscalid (I) zu Pyrimethanil (II) 100 : 1 bis 1 : 100 beträgt.

3. Verfahren zur Bekämpfung von pflanzenpathogenen Schadpilzen, **dadurch gekennzeichnet, dass** man die Schadpilze, deren Lebensraum oder die vor Pilzbefall zu schützenden Pflanzen, den Boden oder Saatgüter mit einer wirksamen Menge einer Mischung gemäß Anspruch 1 behandelt.

4. Verfahren nach Anspruch 3, **dadurch gekennzeichnet, dass** man Boscalid (I) und Pyrimethanil (II), gemäß Anspruch 1, gleichzeitig, und zwar gemeinsam oder getrennt, oder nacheinander ausbringt.

5. Verfahren nach Anspruch 3 oder 4, **dadurch gekennzeichnet, dass** man Boscalid (I) und Pyrimethanil (II) gemäß Anspruch 1, oder eine fungizide Mischung gemäß Anspruch 1, in einer Menge von 5 g/ha bis 2000 g/ha aufwendet.

6. Verfahren nach Anspruch 3 oder 4, **dadurch gekennzeichnet, dass** man Boscalid (I) und Pyrimethanil (II) gemäß Anspruch 1 oder eine fungizide Mischung gemäß Anspruch 1 in einer Menge von 1 g bis 1000 g pro 100 kg Saatgut anwendet.

7. Saatgut, enthaltend die Mischung gemäß Anspruch 1 in einer Menge von 1 g bis 1000 g pro 100 kg.

8. Verwendung der Verbindungen I und II gemäß Anspruch 1 zur Herstellung eines zur Bekämpfung von Schadpilzen geeigneten Mittels.

9. Fungizide Mittel, enthaltend die fungizide Mischung gemäß Anspruch 1 sowie einen festen oder flüssigen Träger.

## Claims

1. A fungicidal mixture comprising

(1) boscalid of the formula (I)

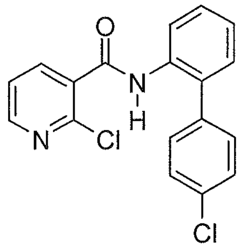

(I)

and
(2) pyrimethanil of the formula (II)

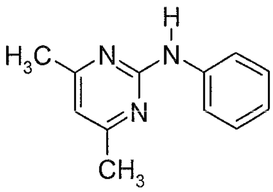

(II)

in a synergistically effective amount.

2. The fungicidal mixture according to claim 1 wherein the weight ratio of boscalid (I) to pyrimethanil (II) is from 100 : 1 to 1 : 100.

3. A method for controlling phytopathogenic harmful fungi wherein the harmful fungi, their habitat or the plants, the soil or seed to be protected against fungal attack are treated with an effective amount of a mixture according to claim 1.

4. The method according to claim 3 wherein boscalid (I) and pyrimethanil (II) according to claim 1 are applied simultaneously, that is jointly or separately, or in succession.

5. The method according to claim 3 or 4 wherein boscalid (I) and pyrimethanil (II) according to claim 1 or a fungicidal mixture according to claim 1 are applied in an amount of from 5 g/ha to 2000 g/ha.

6. The method according to claim 3 or 4 wherein boscalid (I) and pyrimethanil (II) according to claim 1 or a fungicidal mixture according to claim 1 are applied in an amount of from 1 g to 1000 g per 100 kg of seed.

7. Seed comprising the mixture according to claim 1 in an amount of from 1 g to 1000 g per 100 kg.

8. The use of the compounds I and II according to claim 1 for preparing a composition suitable for controlling harmful fungi.

9. A fungicidal composition comprising the fungicidal mixture according to claim 1 and a solid or liquid carrier.

**Revendications**

1. Mélanges fongicides contenant

(1) du boscalide de formule (I)

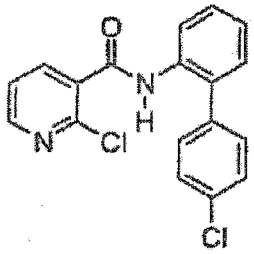

(I)

et
(2) du pyriméthanil de formule (II)

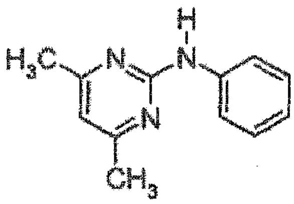

(II)

en une quantité synergiquement active.

2. Mélange fongicide selon la revendication 1, **caractérisé en ce que** le rapport pondéral de boscalide (I) à pyriméthanil (II) est de 100:1 à 1:100.

3. Procédé pour lutter contre des champignons nuisibles phytopathogènes, **caractérisé en ce qu'**on traite les champignons nuisibles, leur espace de vie ou les plantes, le sol ou les semences à protéger contre une attaque par les champignons avec une quantité active d'un mélange selon la revendication 1.

4. Procédé selon la revendication 3, **caractérisé en ce qu'**on applique le boscalide (I) et le pyriméthanil (II), selon la revendication 1, simultanément et ce ensemble ou séparément, ou consécutivement.

5. Procédé selon la revendication 3 ou 4, **caractérisé en ce qu'**on applique le boscalide (I) et le pyriméthanil (II) selon la revendication 1, ou un mélange fongicide selon la revendication 1, en une quantité de 5 g/ha à 2000 g/ha.

6. Procédé selon la revendication 3 ou 4, **caractérisé en ce qu'**on applique le boscalide (I) et le pyriméthanil (II) selon la revendication 1, ou un mélange fongicide selon la revendication 1, en une quantité de 1 g à 1000 g par 100 kg de semences.

**7.** Semences, contenant le mélange selon la revendication 1 en une quantité de 1 g à 1000 g par 100 kg.

**8.** Utilisation des composés I et II selon la revendication 1 pour la préparation d'un agent approprié pour lutter contre des champignons nuisibles.

**9.** Agent fongicide, contenant le mélange fongicide selon la revendication 1 ainsi qu'un support solide ou liquide.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 545099 A
- DD 151404 A
- WO 0329219 A
- WO 200472039 A


### In der Beschreibung aufgeführte Nicht-Patentliteratur


- **COLBY, S. R.** Calculating synergistic and antagonistic responses of herbicide Combinations. *Weeds,* 1967, vol. 15, 20-22